# FASCICULE DE BREVET EUROPEEN

(11) **EP 1 777 104 B1**
(45) Date de publication et mention de la délivrance du brevet: **04.12.2013**
(21) Numéro de dépôt: 06291631.7
(22) Date de dépôt: 19.10.2006
(51) Int. Cl.: B60Q 1/00

(54) **Dispositif d'eclairage et/ou de signalisation pour véhicule automobile avec capot porte-circuit standard**
Kfz- Scheinwerfer oder Leuchte mit einer stromkreistragenden Standardkappe
Vehicle lighting or signaling device with a standard circuit holding cap

(30) Priorité: 20.10.2005 FR 0510729
(43) Date de publication de la demande: 25.04.2007
(73) Titulaire: VALEO VISION, 93012 Bobigny Cedex (FR)
(72) Inventeur: Natchoo, Philippe, 77680 Roissy en Brie (FR); Poirot, Pascal, 91470 Forges les Bains (FR); Cantin, Bertrand, 92130 Issy les Moulineaux (FR)

(56) Documents cités:
- EP-A- 1 136 749
- FR-A- 2 729 741
- FR-A- 2 753 775
- FR-A- 2 854 676
- US-A- 4 714 986
- US-A- 5 722 768
- US-A- 5 906 428
- US-A- 6 161 951
- PATENT ABSTRACTS OF JAPAN vol. 2000, no. 11, 3 janvier 2001 (2001-01-03) & JP 2000 235809 A (MATSUSHITA ELECTRIC WORKS LTD), 29 août 2000 (2000-08-29)

## Description

L'invention concerne de manière générale des dispositifs d'éclairage et/ou signalisation, tels que projecteurs ou feux de signalisation, destinés à être montés dans des véhicules automobiles.

Plus particulièrement, l'invention concerne un dispositif d'éclairage et/ou signalisation pour véhicule comprenant un boîtier, une source de lumière et au moins un circuit électronique.

L'évolution technique actuelle dans le domaine de l'automobile tend vers d'avantage d'intégration de composants et de circuits électroniques dans les véhicules.

En particulier, pour ce qui concerne les projecteurs d'éclairage et les feux de signalisation, la part de l'électronique dans la composition des produits a très fortement augmenté ces dernières années, notamment avec l'introduction des lampes à décharge dans les projecteurs et des diodes électroluminescentes dans les feux de signalisation.

Dans les années qui viennent, cette évolution ne peut que se poursuivre dans les systèmes d'éclairage et/ou signalisation compte tenu de l'introduction progressive des fonctions avancées de type AFS.

De manière générale, il est donc souhaitable de proposer des solutions permettant une intégration à moindre coût d'une carte électronique dans un dispositif d'éclairage et/ou signalisation. Les solutions proposées doivent également satisfaire aux contraintes d'étanchéité qui sont souvent imposées dans ce domaine technique.

Par ailleurs, le besoin d'accessibilité à cette carte électronique doit également être pris en compte par exemple afin de pouvoir la remplacer en cas de défaillance.

Dans sa demande de brevet français publiée FR-2854676, la demanderesse a divulgué un projecteur équipé d'un capot dans lequel est fixé un actionneur pour la correction d'un angle de site du projecteur. Dans cette solution spécifique, bien adaptée à l'intégration d'un actionneur de correction, il est prévu une carte électronique logée dans le capot et destinée à la commande de l'actionneur. Cette carte est montée dans un logement dédié du capot et des broches de connexion électrique de l'actionneur sont insérées dans des trous perforés de la carte et soudées à des pastilles de cuivre correspondantes de celle-ci. Cette fixation par soudure de la carte électronique n'autorise pas un démontage aisé de la carte.

L'invention concerne donc un dispositif d'éclairage et/ou signalisation pour véhicule automobile selon les caractéristiques techniques de la revendication 1.

Selon une autre caractéristique, le dispositif comprend un connecteur électrique amovible apte à s'adapter dans une relation de connexion électrique avec une partie de connexion correspondante présente dans le circuit électronique.

Selon encore une autre caractéristique, le capot porte-circuit comprend également des premiers moyens élastiques pour maintenir en position le circuit électronique dans un logement du capot porte-circuit.

De préférence, les premiers moyens élastiques comprennent au moins une partie de clipsage venant en appui contre une partie correspondante d'un chant de circuit imprimé du circuit électronique. De plus, les premiers moyens élastiques peuvent également comprendre au moins une languette élastique venant en appui contre une partie correspondante d'une face de circuit imprimé du circuit électronique.

Selon encore une autre caractéristique, le capot porte-circuit comprend également des seconds moyens élastiques pour maintenir en position le connecteur électrique lorsque celui-ci est adapté en relation de connexion électrique avec la partie de connexion correspondante du circuit électronique.

Pour permettre une étanchéité du montage, le capot porte-circuit comprend également un joint d'étanchéité apte à assurer une fermeture étanche de l'ouverture du boîtier lorsque le capot porte-circuit est verrouillé sur l'ouverture.

Selon une autre forme de réalisation particulière, l'ouverture du boîtier dans laquelle est monté le capot est d'un type standard compatible pour le montage d'une douille porte-lampe en lieu et place du capot porte-circuit.

D'autres aspects et avantages de la présente l'invention apparaîtront plus clairement à la lecture de la description de formes de réalisation particulières qui vont suivre, cette description étant donnée à titre d'exemple non limitatif et faite en référence aux dessins annexés, dans lesquels :
la Fig.1 montre sous la forme d'une vue en coupe schématique une configuration générale d'un projecteur selon l'invention;
la Fig.2 est une vue en trois dimensions représentant un capot porte-circuit équipé d'une carte électronique, d'un connecteur électrique et d'un joint d'étanchéité;
la Fig.3 est une vue en coupe en trois dimensions représentant le capot porte-circuit équipé de la Fig.2;
la Fig.4 est une autre vue en coupe en trois dimensions représentant le capot porte-circuit équipé de la Fig.2; et
la Fig.5 est une vue en trois dimensions représentant le capot porte-circuit nu;

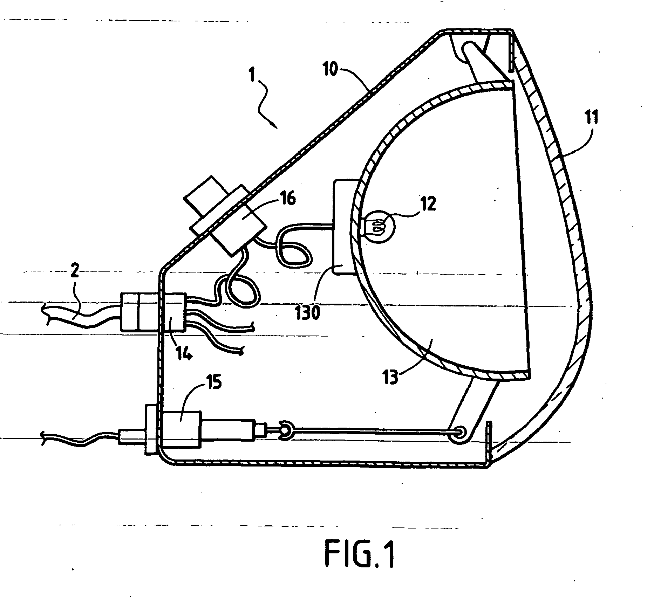

En référence à la Fig.1, il est maintenant décrit une première forme de réalisation particulière, désignée globalement 1, d'un dispositif d'éclairage et/ou signalisation tel que projecteur selon l'invention.

Comme montré à la Fig.1, le projecteur 1 comprend essentiellement un boîtier 10, une glace transparente 11, une lampe 12 en tant que source de lumière, un réflecteur 13, un connecteur général d'alimentation et de commande 14, un capot porte-actionneur 15 et un capot porte-circuit 16.

Le boîtier 10, la glace 11, le réflecteur 13, le capot porte-circuit 14 sont de préférence des pièces obtenues par moulage par injection de matières plastiques synthétiques telles que le polypropylène (PP), le polycarbonate (PC) ou le polyméthacrylate de méthyle (PMMA).

Le connecteur 14 est de préférence un élément standard qui relie électriquement le projecteur 1 à un réseau électrique d'alimentation et de commande du véhicule.

Le capot porte-actionneur 15 intègre un actionneur de correction d'angle de site. Dans cette forme de réalisation de l'invention, le capot porte-actionneur 15 est par exemple tel que décrit dans la demande de brevet FR-2854676 commentée ci-dessus dans l'exposé de la technique antérieure. Le lecteur se reportera utilement à cette demande de brevet pour davantage de détails sur le capot porte-actionneur 15.

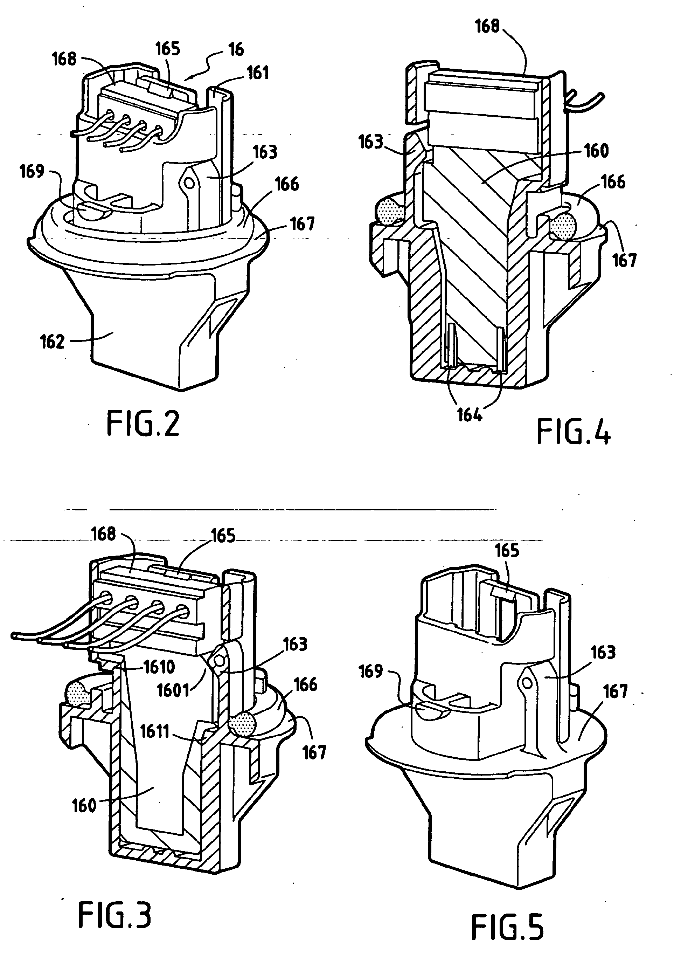

Le capot porte-circuit 16 intègre un circuit électronique 160 (représenté aux Figs.2 à 4).

Comme cela apparaît à la Fig.1, dans cette forme de réalisation, le capot porte-circuit 16 est relié d'une part au réseau électrique 2 du véhicule à travers le connecteur général 14 et, d'autre part, à la lampe 12 à travers un porte-lampe 130 associé au réflecteur 13. Dans cette forme de réalisation particulière, le circuit électronique 160 remplit une fonction d'abaissement et de régulation de tension, afin d'alimenter la lampe 12 avec une tension appropriée à partir de la tension de batterie.

En référence maintenant aux Figs.2 à 5, le capot porte-circuit 16 comprend essentiellement un logement de circuit imprimé 161, une poignée de manoeuvre 162, des éléments élastiques de maintien de circuit imprimé et connecteur 163, 164 et 165, un joint torique d'étanchéité 166 monté sur une partie circonférentielle 167 formant plateforme de fermeture et des ergots de verrouillage 169.

Comme cela apparaît plus particulièrement aux Figs.3 et 4, le logement 161 se prolonge à l'intérieur de la poignée 162. Le volume de la poignée 162, dont la fonction est de permettre le montage / démontage du capot, est ainsi utilisé pour y insérer une partie de la carte électronique 160. Cette caractéristique facilite l'intégration de manière générale, en réduisant la place nécessaire à l'intérieur du projecteur 1 pour l'implantation de la carte 160.

Un autre avantage de cette insertion partielle de la carte 160 dans la poignée 162 réside dans la possibilité d'obtenir une meilleure gestion thermique. En effet, la carte 160 est ainsi partiellement déportée sur une partie périphérique du boîtier 10, ce qui l'éloigne des parties réputées chaudes (voisinage des lampes) du projecteur. La portion de la carte 160 contenue dans la poignée 162 est davantage soumise à une ambiance thermique extérieure qu'à l'ambiance thermique interne du projecteur.

Comme montré aux Figs.3 et 4, le logement 161 comporte des parois formant des coins de détrompage 1610 et 1611 pour le circuit électronique 160.

Les coins de détrompage 1610 et 1611 permettent de définir une position d'insertion unique du circuit électronique 160 dans son logement 161. On notera que la partie en blanc du circuit 160, tel que réprésenté à la Fig.3, est la zone d'implantation des composants électroniques sur le circuit.

Les éléments élastiques de maintien de circuit électronique comprennent un clip 163 et des languettes 164. Une fois le circuit électronique 160 inséré dans son logement 161, le clip 163 vient en appui contre un champ incliné 1601 du circuit 160 et maintien en position ce dernier en s'opposant à sa sortie du logement 161. Les languettes 164 sont ici au nombre de deux et assurent également, outre la fonction de maintien en position, une fonction de guidage du circuit électronique 160 lors de l'insertion de celui-ci dans le logement 161.

Les éléments 163 et 164 sont prévus de telle manière à exercer une force de maintien en position qui est suffisante pour s'opposer à un retrait non voulu du circuit 160 hors de son logement 161, du fait par exemple de vibrations ou chocs mécaniques.

Comme montré dans les figures, la connexion électrique du circuit électronique 160 est assurée au moyen d'un connecteur 168. Quatre fils électriques relient le connecteur 168 au connecteur général 14 et à la lampe 12.

Le connecteur 168 est, dans cette forme de réalisation, un connecteur femelle pour circuit imprimé, de préférence d'un type standard bas coût disponible sur catalogue. Le connecteur 168 comporte ici quatre languettes de contact électrique (non représentées) prévues pour venir en contact avec une partie de connexion correspondante (non représentée) du circuit 160. De préférence, cette partie de connexion correspondante est formée directement sur le circuit 160 au moyen de quatre bandes de cuivre parallèles.

Conformément à l'invention, pour rendre compatible l'utilisation d'un tel connecteur 168 dans cette application automobile, le capot porte-circuit 16 est muni de l'élément élastique de maintien de connecteur 165. L'élément 165 assure un maintien en position par clipsage du connecteur 168 sur la partie de connexion correspondante du circuit 160 et s'oppose à un retrait non voulu du connecteur 168, du fait par exemple de vibrations ou chocs mécaniques.

De préférence, la partie circonférentielle 167, les ergots de verrouillage 169 et le joint torique 166 sont des éléments standards adaptés à une fermeture étanche de type quart de tour de différentes ouvertures dans le boîtier 10 du projecteur 1. En effet, conformément à l'invention, il est recherché une standardisation des ouvertures dans le boîtier 10.

Avantageusement, l'ouverture standard est une ouverture adaptée au montage d'une douille porte-lampe à montage à baïllonnette quart de tour pour une lampe P21W ou H4. Il est ainsi possible, par l'utilisation de solutions éprouvées, d'obtenir des réductions de coûts significatives lors de la conception des dispositifs d'éclairage et/ou signalisation et des moules de plasturgie.

Par la coopération des différents moyens 163, 164, 165 et 168, la présente invention autorise un montage aisé du circuit électronique 160 dans le capot porte-circuit 16, ainsi qu'un remplacement rapide de celui-ci du fait de son amovibilité. Les fils électriques reliant le circuit 160 au connecteur général 14 et au porte-lampe 130 auront de préférence une longueur suffisante pour faciliter les opérations de montage et remplacement en permettant un éloignement adéquat du capot porte-circuit 16 par rapport au boîtier 10.

La présente invention ne se limite pas aux détails des formes de réalisation décrites ici à titre d'exemple, mais s'étend au contraire aux modifications à la portée de l'homme du métier, la portée de l'invention étant définie par les revendications annexées.

## Revendications

1. Dispositif d'éclairage et/ou signalisation pour véhicule automobile comprenant
- un boîtier (10),
- une source de lumière (12),
- au moins un circuit électronique (160), et
- au moins un capot porte-circuit (16) apte à être verrouillé sur une ouverture adaptée du boîtier (90) et à loger le circuit électronique (160),
- le capot porte-circuit (16) comprenant un logement de circuit imprimé (161) et une poignée de manoeuvre (162),
- le capot porte-circuit (16) comportant des ergots de verrouillage (169) aptes à coopérer avec des parties complémentaires du boîtier (10) de manière à autoriser un verrouillage par montage à baïonnette du capot (16) sur l'ouverture,
- le verrouillage étant obtenu en faisant effectuer un quart de tour au capot (16) autour d'un axe longitudinal de celui-ci lorsque le capot (16) est en place dans l'ouverture.
**caractérisé en ce que** le logement (161) se prolonge à l'intérieur de la poignée (162), pour y insérer de façon amovible une partie du circuit électronique (160) de telle manière que le circuit électronique (160) puisse être retiré du capot (16) lorsque le capot (16) est désolidarisé du boîtier (10),

2. Dispositif selon la revendication 1, **caractérisé en ce qu'**il comprend un connecteur électrique amovible (168) apte à s'adapter dans une relation de connexion électrique avec une partie de connexion correspondante présente dans le circuit électronique (160).

3. Dispositif selon la revendication 1 ou 2, **caractérisé en ce que** le capot porte-circuit (16) comprend également des premiers moyens élastiques (163, 164) pour maintenir en position le circuit électronique (160) dans un logement (161) du capot porte-circuit (16).

4. Dispositif selon la revendication 3, **caractérisé en ce que** les premiers moyens élastiques (163, 164) comprennent au moins une partie de clipsage (163) venant en appui contre une partie correspondante (1601) d'un champ de circuit imprimé du circuit électronique (160).

5. Dispositif selon la revendication 3 ou 4, **caractérisé en ce que** les premiers moyens élastiques (163, 164) comprennent également au moins une languette élastique (164) venant en appui contre une partie correspondante d'une face de circuit imprimé du circuit électronique (160).

6. Dispositif selon l'une quelconque des revendications 2 à 5, **caractérisé en ce que** le capot porte-circuit (16) comprend également des seconds moyens élastiques (165) pour maintenir en position le connecteur électrique (168) lorsque celui-ci est adapté en relation de connexion électrique avec la partie de connexion correspondante du circuit électronique (160).

7. Dispositif selon l'une quelconque des revendications 1 à 6, **caractérisé en ce que** le capot porte-circuit (16) comprend également un joint d'étanchéité (166) apte à assurer une fermeture étanche de l'ouverture du boîtier (10) lorsque le capot porte-circuit (16) est verrouillé sur l'ouverture.

8. Dispositif selon l'une quelconque des revendications 1 à 7, **caractérisé en ce que** l'ouverture est d'un type standard compatible pour le montage d'une douille porte-lampe en lieu et place du capot porte-circuit (16).

## Patentansprüche

1. Kraftfahrzeugbeleuchtungs- und/oder -signalgebungsvorrichtung, mit
- einem Gehäuse (10),
- einer Lichtquelle (12),
- wenigstens einer elektronischen Schaltung (160), und
- wenigstens einem schaltungstragenden Deckel (16), der auf einer geeigneten Öffnung des Gehäuses (10) verriegelt zu werden vermag und der die elektronische Schaltung (160) aufzunehmen vermag,
- wobei der schaltungstragende Deckel (16) eine Leiterplattenaufnahme (161) und einen Bedienungsgriff (162) umfasst,
- wobei der schaltungstragende Deckel (16) Verriegelungsnasen (169) aufweist, die mit komplementären Teilen des Gehäuses (10) solchermaßen zusammenzuwirken vermögen, dass eine Verriegelung durch Bajonettmontage des Deckels (16) auf der Öffnung möglich ist,
- wobei die Verriegelung dadurch erreicht wird, dass der Deckel (16) eine Vierteldrehung um seine Längsachse ausführt, wenn sich der Deckel (16) an Ort und Stelle in der Öffnung befindet,
**dadurch gekennzeichnet, dass** sich die Aufnahme (161) innen im Griff (162) fortsetzt, um darin einen Teil der elektronischen Schaltung (160) lösbar einzufügen, so dass die elektronische Schaltung (160) aus dem Deckel (16) entfernt werden kann, wenn der Deckel (16) vom Gehäuse (10) getrennt ist.

2. Vorrichtung nach Anspruch 1,
**dadurch gekennzeichnet, dass** sie einen lösbaren elektrischen Verbinder (168) umfasst, der in einer elektrischen Anschlussverbindung mit einem in der elektronischen Schaltung (160) vorhandenen entsprechenden Anschlussteil verbunden zu werden vermag.

3. Vorrichtung nach Anspruch 1 oder 2,
**dadurch gekennzeichnet, dass** der schaltungstragende Deckel (16) auch erste elastische Mittel (163, 164) umfasst, um die elektronische Schaltung (160) in einer Aufnahme (161) des schaltungstragenden Deckels (16) an Ort und Stelle zu halten.

4. Vorrichtung nach Anspruch 3,
**dadurch gekennzeichnet, dass** die ersten elastischen Mittel (163, 164) wenigstens ein Clipverbindungsteil (163) aufweisen, das gegen ein entsprechendes Teil (1601) eines Leiterplattenbereichs der elektronischen Schaltung (160) in Anlage gelangt.

5. Vorrichtung nach Anspruch 3 oder 4,
**dadurch gekennzeichnet, dass** die ersten elastischen Mittel (163, 164) auch wenigstens eine elastische Zunge (164) aufweisen, die gegen ein entsprechendes Teil einer Leiterplattenseite der elektronischen Schaltung (160) in Anlage gelangt.

6. Vorrichtung nach einem der Ansprüche 2 bis 5,
**dadurch gekennzeichnet, dass** der schaltungstragende Deckel (16) auch zweite elastische Mittel (165) umfasst, um den elektrischen Verbinder (168) an Ort und Stelle zu halten, wenn dieser in elektrischer Anschlussverbindung mit dem entsprechenden Anschlussteil der elektronischen Schaltung (160) verbunden ist.

7. Vorrichtung nach einem der Ansprüche 1 bis 6,
**dadurch gekennzeichnet, dass** der schaltungstragende Deckel (16) auch eine Dichtung (166) umfasst, die ein dichtes Verschließen der Öffnung des Gehäuses (10) zu gewährleisten vermag, wenn der schaltungstragende Deckel (16) auf der Öffnung verriegelt ist.

8. Vorrichtung nach einem der Ansprüche 1 bis 7,
**dadurch gekennzeichnet, dass** die Öffnung eine Standardausführung ist, die mit der Montage einer Lampenfassung an Stelle des schaltungstragenden Deckels (16) kompatibel ist.

## Claims

1. Lighting and/or signalling device for a motor vehicle, comprising:
- a housing (10);
- a source of light (12);
- at least one electronic circuit (160); and
- at least one circuit-holder casing (16) which can be locked on a suitable opening in the housing (10) and accommodate the electronic circuit (160);
- the circuit-holder casing (16) comprising a printed circuit receptacle (161) and a manoeuvring handle (162);
- the circuit-holder casing (16) comprising locking lugs (169) which can cooperate with complementary parts of the housing (10), such as to permit locking by means of bayonet mounting of the casing (16) on the opening;
- the locking being obtained by implementing a quarter turn on the casing (16) around a longitudinal axis of the latter, when the casing (16) is in place in the opening,
**characterised in that** the receptacle (161) extends inside the handle (162), in order to insert in the latter, in a removable manner, part of the electronic circuit (160), such that the electronic circuit (160) can be withdrawn from the casing (16) when the casing (16) is separated from the housing (10).

2. Device according to claim 1, **characterised in that** it comprises a removable electrical connector (168) which can be fitted in an electrical connection relationship with a corresponding connection part which is present in the electronic circuit (160).

3. Device according to claim 1 or 2, **characterised in that** the circuit-holder casing (16) also comprises first resilient means (163, 164) in order to retain the electronic circuit (160) in position in a receptacle (161) of the circuit-holder casing (16).

4. Device according to claim 3, **characterised in that** the first resilient means (163, 164) comprise at least one clipping part (163) which is supported against a corresponding part (1601) of a printed circuit field of the electronic circuit (160).

5. Device according to claim 3 or 4, **characterised in that** the first resilient means (163, 164) also comprise at least one resilient tongue (164) which is supported against a corresponding part of a printed circuit surface of the electronic circuit (160).

6. Device according to any one of claims 2 to 5, **characterised in that** the circuit-holder casing (16) also comprises second resilient means (165) in order to retain the electrical connector (168) in position when the latter is fitted in an electrical connection relationship with the corresponding connection part of the electronic circuit (160).

7. Device according to any one of claims 1 to 6, **characterised in that** the circuit-holder casing (16) also comprises a seal (166) which can ensure sealed closure of the opening in the housing (10), when the circuit-holder casing (16) is locked on the opening.

8. Device according to any one of claims 1 to 7, **characterised in that** the opening is of a standard type which is compatible for mounting of a lamp-holder socket instead of, and in the place of, the circuit-holder casing (16).
